# EUROPÄISCHE PATENTSCHRIFT

(11) **EP 0 557 612 B1**
(45) Veröffentlichungstag und Bekanntmachung des Hinweises auf die Patenterteilung: **17.10.2001**
(21) Anmeldenummer: 92121669.3
(22) Anmeldetag: 19.12.1992
(51) Int. Cl.: H01Q 1/42, B32B 27/12

(54) **Verfahren zur Herstellung von regenerosionsgeschützten Radomen**
Method for the manufacture of radomes protected against rain erosion
Procédé pour la fabrication de radômes protégés contre l'érosion de la pluie

(30) Priorität: 11.01.1992 DE 4200572
(43) Veröffentlichungstag der Anmeldung: 01.09.1993
(73) Patentinhaber: EADS Deutschland GmbH, 81663 München (DE)
(72) Erfinder: Unger, Wolfgang, Dipl.-Ing., W-7992 Tettnang (DE); Schneider, Horst, Dipl.-Ing., W-7758 Meersburg (DE); Spelz, Ulrich, Dipl.-Ing., W-7997 Immenstaad (DE); Waldenmaier, Thomas, Dipl.-Ing., W-7778 Markdorf (DE)

(56) Entgegenhaltungen:
- EP-A- 0 155 599
- EP-A- 0 158 116
- EP-A- 0 321 264
- US-A- 3 616 140
- US-A- 4 353 769
- PATENT ABSTRACTS OF JAPAN vol. 9, no. 81 (E-307)(1804) 10. April 1985
- MICROWAVE JOURNAL Bd. 29, Nr. 8, 1986, DEDHAM, MASSACHUSETTS, USA Seiten 111 - 114 J.W.DOWNS 'designing for fiberglass and composites'

## Beschreibung

Die Erfindung betrifft ein Verfahren zur Herstellung von regenerosionsgeschützten Radomen gemäß dem Oberbegriff des Anspruchs 1, wie es beispielsweise aus der US-PS 3.616.140 bekannt ist.

Weiterhin ist es aus Druckschriften wie der EP-A-0155599 oder der EP-A-0158116 bekannt geworden, Radome aus faserverstärkten Thermoplasten herzustellen.

Bei Flugzeugen, die mit hoher Geschwindigkeit oder im Überschall-Bereich fliegen können, sind die exponierten Radome durch Regenerosion gefährdet. Die auf das Radom aufprallenden Regentropfen können innerhalb weniger Minuten die tragende Struktur sowohl von monolithischen wie auch von Radomen in Sandwichbauweise teilweise oder ganz zerstören.

Zur Vermeidung solcher Schäden ist es bekannt, die duroplastische Basis-struktur von Radomen mit einer thermoplastischen Regenerosionsdeckschicht zu versehen. Die Verklebung beider Schichten mittels eines Klebers z.B. Epoxidharzklebers, ergibt keine ausreichende Haftung für die Regenerosionsschicht.

Weiter ist es bekannt, dass Radome vollständig aus faserverstärkten Thermoplasten wie z.B. (PEEK, PEI, PES) hergestellt werden. Die Werkstoffe zeichnen sich nur dann durch eine sehr hohe Regenerosionsbeständigkeit aus, wenn keine Fasern die Oberflächenschicht stören. Nachteilig sind das hohe spezifische Gewicht im Vergleich zu Sandwichaufbauten, die schwierige Verarbeitbarkeit und der hohe Preis dieser Werkstoffe.

Aufgabe der Erfindung ist es ein Radom (monolithisch oder in Sandwichbauweise) aus einem duroplastischen Faserverbundwerkstoff mit einer integrierten Regenerosionsschutzschicht aus einem thermoplastischen Werkstoff zu versehen.

Diese Aufgabe wird erfindungsgemäß durch die Lehren des Hauptanspruchs gelöst. Die Unteransprüche betreffen Verfahrensschritte zur Erzielung einer maximalen Haftung zwischen Duroplast und Thermoplast.

Das beim Gegenstand der Erfindung angewandte Harzinjektionsverfahren ist unter anderem in folgenden Vorveröffentlichungen beschrieben:
- Schik, Siegberg "Eine fortschrittliche GFK-Fertigungstechnik" setzt sich durch: Praxiserfahrungen mit dem Vakuum-Injektions-Verfahren; Kunststoff Nachrichten, Seiten 13 bis 19
- Heitz "Mechanisierung des GFK-Injektionsverfahrens" Kunststofftechnik 13, 1974, Seiten 197 bis 200.

Diese bekannten Verfahren verwenden Harze, die mit Reaktionsmitteln vermischt werden. Als Reaktionsmittel werden Härter, aber auch Beschleuniger und gegebenenfalls Inhibitoren eingesetzt.

Stand der Technik ist das Herstellen eines regenerosionsbeständigen Aufbaus, bestehend aus Schutzschicht (Thermoplast) und Basis (Duroplast) mit Hilfe eines Klebers. Zum Stand der Technik gehört auch die Prepreg-Technik.

Es ist bekannt, dass die erosionsbeständige Verbindung einer duroplastischen Basisstruktur mit einer thermoplastischen Schutzschicht durch Harzinjektion mit Hilfe eines angepassten Verfahrensablaufs möglich ist. Überraschenderweise ergab sich, dass diese Verbindung wesentlich besser ist als einer Verklebung beider Teile.

Durch die in den Patenansprüchen beschriebene Erfindung ergeben sich folgende Vorteile:
- Gemeinsame Verarbeitung (insitu) eines unausgehärteten Duroplasten (Prepregtechnik oder Harz beim RTM-Verfahren) mit einem Thermoplasten, wobei der Thermoplast durch Aktivierung, z.B. Plasmaaktivierung, Fluorieren, Elektronenstrahlaktivierung, Koronaaktivierung oder Laserstrahlaktivierung, vorbehandelt ist.
- Die zusätzliche Klebeschicht wird eingespart, da das Basisharz diese Funktion mit übernimmt.
- Auch zusätzliche Komponenten der Basis (Sandwich) wie nicht ausgehärtete syntaktische Schäume und/oder Hartschäume (Wabenwerkstoffe, Füllwerkstoffe und/oder Kernwerkstoffe, die in die Form eingebracht werden), sowie verschlossene Wabenschichten können in einem Prozess gehärtet werden.

Wesentlicher Vorteil gegenüber der herkömmlichen Technik ist, dass sich der nicht ausgehärtete Basiswerkstoff exakt der vorgeformten Schutzschicht anpaßt und die Verbindung der Schichten einer hohen Regenerosionsbelastung stand hält.

Bei Injektionsverfahren z.B. Resin Transfer Molding (RTM) ist von Vorteil, dass die Struktur bei niedriger Temperatur (60° C bis 80° C) gehärtet wird und erst nach dem Härten bei höheren Temperaturen getempert wird. Dadurch treten geringere innere Spannungen auf und es können die unterschiedlichen Temperaturausdehnungskoeffizienten der unverstärkten Schutzschicht (Thermoplast) und der faserverstärkten Basisstruktur besser ausgeglichen werden.

Die Erfindung wird nachfolgend anhand von Figuren näher erläutert.

Es zeigen:

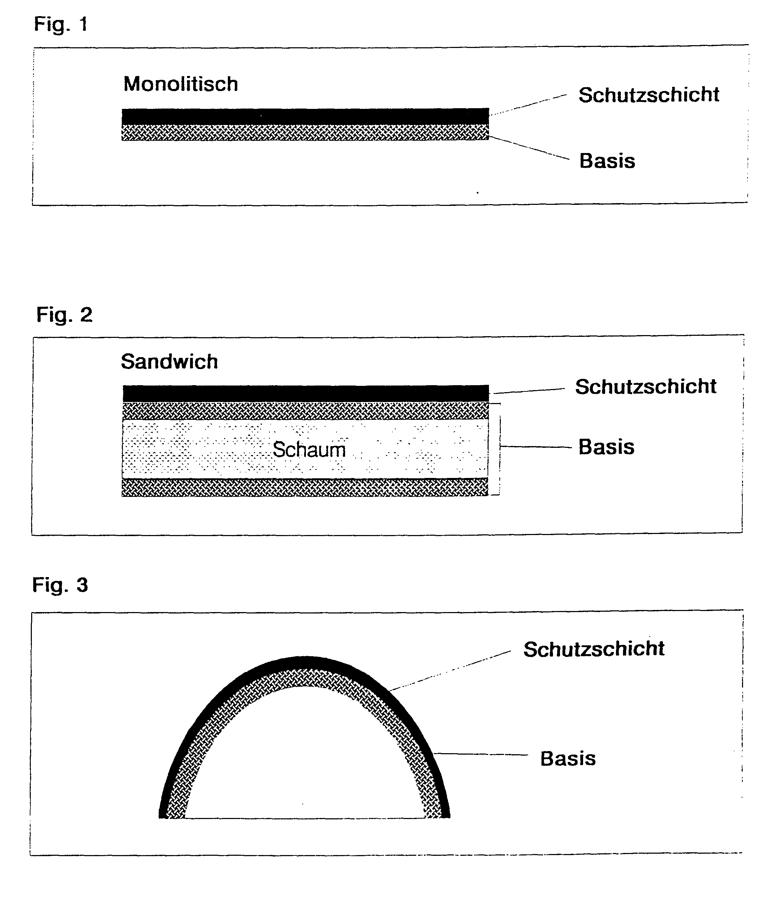

- Fig. 1: einen monolithischen Werkstoff,
- Fig. 2: einen Sandwich-Werkstoff und
- Fig. 3: einen zu einem Radom verformten Werkstoff.

### Beispiel für den Verfahrensablauf

Arbeitsschritte beim Resin-Transfer-Molding (RTM) Verfahren für Sandwichaufbau:

### 1. Anordnung der Schichten:

- RTM-Werkzeug mit Trennmittel behandeln
- Aktivierte Regenerosionsschicht (z.B. PEEK-Folie)im Werkzeug positionieren
- Sandwichaufbau herstellen (Preform) z.B. 4 Lagen Quarzglasgewebe und 3 Lagen syntaktischen Schaum (unausgehärtet) 4 Lagen Quarzglasgewebe (trocken)
- Fixieren der Preform z.B. mit (Heat-bonding) Methode unter Vakuum und Temperatur 80 bis 120° C ca. 5 bis 15 min

### 2. Positionierung und Injektion des Harz-, Härter-Gemisches:

- Positionieren der Preform im Werkzeug
- Schließen des RTM-Werkzeugs
- Heizen des RTM-Werkzeugs auf Infiltrationstemperatur (z.B. 30° C bis 80° C)
- Infiltration des Harzes (mit Vakuum, Druck, Temperatur)

### 3. Aushärtung des Bauteils:

- Härten des Bauteils durch Beheizen auf die Reaktionstemperatur des verwendeten Harzes (60° bis 120° C)
- Abkühlen und Entformen des Bauteils.

### Benötigte Geräte:

- RTM-Werkzeug
- RTM-Anlage
- Aktivierungsanlage für Regenerosionsschicht

### Benötigte Werkstoffe:

- RTM-Harz/Härter-Gemisch
- Gewebe z.B. Quarzglasgewebe mit oder ohne chemischen Binder (heat bondings)
- Kernwerkstoff z.B. syntaktischer Schaum (unausgehärtet)
- Regenerosionsschutzschicht (z.B. PEEK).

### Verzeichnis der verwendeten Abkürzungen

| | **deutsch:** | **englisch:** |
|---|---|---|
| PEEK | Polyethenetherketon | |
| | | |
| PEJ | Polyetherimid | |
| | | |
| PES | Polyethersulfon | |
| | | |
| GFK | Glasfaserverstärkte Kunststoffe | |
| | | |
| RTM | | Resin Transfer Molding |
| | | |
| PA | | |
| | | |
| | | Polyamid |

## Patentansprüche

1. Verfahren zur Herstellung von regenerosionsgeschützten Radomen, wobei eine duroplastische Basisstruktur mit einer thermoplastischen Regenerosionsdeckschicht verbunden wird, **dadurch gekennzeichnet, dass** die unausgehärtete duroplastische Basisstruktur und die Deckschicht in einer Form angeordnet werden und ein Gemisch aus einem Harz und einem Härter in die Form injiziert und ausgehärtet wird.

2. Verfahren nach Anspruch 1, **dadurch gekennzeichnet, dass** die thermoplastische Deckschicht vor dem Einbringen in die Form durch Aktivierungsverfahren wie:
- Plasmaaktivierung oder
- Fluorieren oder
- Elektronenstrahlaktivieren oder
- Koronaaktivieren oder
- Laserstrahlaktivieren
vorbehandelt wird.

3. Verfahren nach Anspruch 1 oder 2, **dadurch gekennzeichnet, dass** nicht ausgehärtete syntaktische Schäume und/oder Hartschäume, Wabenwerkstoffe, Füllwerkstoffen und/oder Kernwerkstoffe in die Form eingebracht werden.

4. Verfahren nach Ansprüchen 1 bis 3, **dadurch gekennzeichnet, dass** beim RTM-Injektions-Verfahren die Struktur bei niedrigen Temperaturen (60° C bis 80° C) gehärtet wird und erst nach dem Härten bei höheren Temperaturen getempert wird.

## Claims

1. A method of manufacturing radomes protected against rain erosion, wherein a thermosetting plastics base structure is joined to a thermoplastic covering layer protecting against rain erosion, **characterised in that** the unhardened thermosetting plastics base structure and the covering layer are arranged in a mould, and a mixture comprising a resin and a hardener is injected into the mould and hardened.

2. A method according to claim 1, **characterised in that**, before being introduced into the mould, the thermoplastic covering layer is pretreated by an activation process such as:
- plasma activation or
- fluorination or
- electron beam activation or
- corona activation or
- laser beam activation.

3. A method according to claim 1 or 2, **characterised in that** non-hardened syntactic foams and/or rigid foams, honeycomb materials, fillers and/or nuclear materials are introduced into the mould.

4. A method according to claims 1 to 3, **characterised in that**, when using the RTM injection method, the structure is hardened at low temperatures (60°C to 80°C) and, after hardening, is annealed at higher temperatures.

## Revendications

1. Procédé de fabrication de radômes protégés contre l'érosion de la pluie selon lequel on combine une structure de base thermodurcissable à une couche de protection thermoplastique contre l'érosion de la pluie,
**caractérisé en ce que**
la structure de base thermodurcissable non durcie et la couche de revêtement sont placées dans un moule, et on injecte un mélange formé d'une résine et d'un durcisseur dans le moule et on laisse durcir.

2. Procédé selon la revendication 1,
**caractérisé en ce que**
la couche de revêtement thermoplastique avant son introduction dans le moule est soumise à un procédé d'activation par activation au plasma, fluoration ou faisceaux d'électrons ou par effet couronne ou par traitement au laser.

3. Procédé selon la revendication 1 ou 2,
**caractérisé en ce que**
l'on place dans le moule des mousses syntactiques non durcies et/ou des mousses dures, des matières alvéolaires, des matières de remplissage et/ou des matières formant le noyau.

4. Procédé selon l'une quelconque des revendications 1 à 3,
**caractérisé en ce que**
pour le procédé d'injection RTM, on fait durcir la structure à des températures faibles (60°C à 80°C) et on trempe seulement après durcissement à des températures plus élevées.
